# EUROPEAN PATENT APPLICATION

(11) **EP 3 301 834 A1**
(43) Date of publication of application: **04.04.2018**
(21) Application number: 16306273.0
(22) Date of filing: 30.09.2016
(51) Int. Cl.: H04J 3/06, H04J 3/16, H04J 3/07

(54) **REFERENCE CLOCK TRANSMISSION VIA PROPRIETARY LINE FRAME SIGNAL**

(71) Applicant: ALCATEL LUCENT, 92100 Boulogne-Billancourt (FR)
(72) Inventor: MEYER, Gerhard, 70435 Stuttgart (DE)
(74) Representative: MERH-IP Matias Erny Reichl Hoffmann Patentanwälte PartG mbB

(57) **Abstract**

This application relates to a method for transmitting a reference clock having a high stability over an optical fiber section of an Optical Transport Network. The method comprises receiving an asynchronous transport signal, synchronizing a locally generated clock with the reference clock and generating a link frame signal clock based on the reference clock. The method also comprises converting the asynchronous transport signal into an outer transport frame signal by encapsulating the asynchronous transport signal into one or more outer transport frames using the locally generated clock. The method further comprises generating a link frame signal which includes the outer transport frame signal using the link frame signal clock and transmitting the link frame signal over the optical fiber section.

## Description

### Technical Field

This application relates to the field of telecommunications, and more particularly, to a method and related apparatus for transmitting data in an optical transport network.

### Background

In telecommunications, network equipment at the edge of a network such as base stations, routers, carrier grade Ethernet switches etc. as well as network termination devices at customer premise require to track a system clock thereof to a reference clock which is highly-stable and accurate, e.g. a reference clock derived from GPS or an ITU-T G.811 BITS clock in a central office. However, distribution of reference clocks in such a way may lack reliability.

Synchronous transmission technologies such as Synchronous Ethernet, Synchronous Digital Hierarchy/Synchronous Optical Networking (SDH/SONET) have been considered to be the solution for reference clock distribution for routers and Ethernet switches. However, as Ethernet signals cannot bridge more than 80 km, they are not applicable for metro and long-haul wavelength-division-multiplexing (WDM) transmission which has transmission distance from 100 km up to 6000 km. Another recently-proposed solution is an out-of-band timing channel (OTC), which needs to apply another out-of-band wavelength. Additionally, this solution has the limitation to be terminated in every optical line amplifier, for example, it should be terminated every 80 km, and therefore the transmission distance can be only spanned up to roughly 2000 km with maximum 25 hops. Besides, one additional network card is required in every node for this solution.

Alternative to the synchronous transmission technologies, Optical Transport Network (OTN) has been utilized to combine the benefits of SDH/SONET technology with the bandwidth expandability of dense wavelength division multiplex (DWDM). Although the ITU has defined in ITU-T G.709 the signal formats and interfaces of the OTN having a basic frame structure of optical Transport Module of size k (OUTk), reference clock transport is, however, not intended or foreseen in the ITU-T standard G.709 due to the asynchronous nature of the OTN. Besides, since the OTUk signal frequency is bound to the high-order Optical Data Unit (HO-ODU) signal which may jump in frequency and phase depending from its source, transmission of reference clock via an OTUk signal is not possible as of today.

Thus, in order to better integrate the OTN architecture into existing networking equipment and to implement reference clock distribution over the optical infrastructure, there is a need to provide a more efficient and more cost-effective way to transmit reference clocks with high stability and accuracy across the OTN.

### Summary

In view of these needs, the present document proposes a method for implementing reference clock distribution over an optical network, and in particular, for providing a more efficient and more cost-effective way to transmit highly-stable and accurate reference clocks across an Optical Transport Network.

An aspect of the disclosure relates to a method for transmitting a reference clock over an optical fiber section of an Optical Transport Network. The reference clock typically has a high stability. For example, the reference clock may be derived from a highly accurate clock in a central office. For transmission in the optical transport network, the method may comprise receiving an asynchronous transport signal. Generally, the asynchronous transport signal has a signal format suitable for the optical transport network and the asynchronous transport signal may have a frame structure referred to as Optical Transport Units (OTU). In particular, each of the Optical Transport Units may comprise a frame alignment signal and a higher order Optical Data Unit (ODU) with an overhead section and a payload section. Moreover, the Optical Data Unit may represent a switchable transport entity within the Optical Transport Network and may be synchronously or asynchronously mapped into the corresponding Optical Transport Unit.

The method may further comprise synchronizing a locally generated clock with the reference clock. The method may also comprise generating a link frame signal clock based on the reference clock. Furthermore, the method may comprise converting the asynchronous transport signal into an outer transport frame signal. More specifically, the asynchronous transport signal may be converted into the outer transport frame signal by encapsulating the asynchronous transport signal into one or more outer transport frames using the locally generated clock. In other words, the asynchronous transport signal is packed (wrapped) in outer data unit areas of outer transport frames of the outer transport frame signal.

According to the disclosure, the one or more outer transport frames may provide a data unit rate higher than a nominal bit rate of the asynchronous transport signal. In particular, encapsulating the asynchronous transport signal into one or more outer transport frames using the locally generated clock may comprise adapting the bit rate of the asynchronous transport signal to the data unit rate of the one or more outer transport frames The data unit rate of the one or more outer transport frames may be derived from the locally generated clock.. Furthermore, encapsulating the asynchronous transport signal into one or more outer transport frames using the locally generated clock may comprise asynchronously mapping the rate adapted transport signal into the one or more outer transport frames at the rate of the locally generated clock.

The method may further comprise generating a link frame signal from the outer transport frames. The link frame signal may comprise/include the outer transport frame signal. In particular, the link frame signal may be generated using the link frame signal clock. More specifically, the generation of the link frame signal may comprise adding a link frame and Forward Error Correction (FEC) data to the one or more outer transport frames. In detail, the FEC data may be based on Reed-Solomon error correction. However, the FEC data may be generated by different error correction types. After the link frame signal has been properly generated, the method may also comprise transmitting the link frame signal over the optical fiber section of the Optical Transport Network. In detail, the link frame signal may be optically modulated using different types of optical modulation schemes, for example, using Quadrature Amplitude Modulation (QAM) schemes.

According to the disclosure, the method may further comprise adding a reference clock status message to the link frame signal. The reference clock status message may, for example, comprise a synchronization status message (SSM). In particular, the synchronization status message (SSM) may be used to inform a subsequent network element (e.g. a downstream network element) about the quality of the reference clock. According to an embodiment, the reference clock status message may be added to one or more bytes of the link frame of the generated link frame signal.

Configured as above, by locking the link frame signal to the reference clock, the reference clock can be efficiently transmitted over the Optical Transport Network. Also, since the reference clock status message is transmitted together with the link frame signal, a subsequent network element can be informed about the quality of the reference clock through the reference clock status message. In other words, the transmitted optical signal generated according to the disclosed method carries the reference clock and the status message so that the reference clock can be efficiently distributed over the Optical Transport Network.

Another aspect of the disclosure relates to a transmitter for transmitting a reference clock having a high stability over an Optical Transport Network. As mentioned above, the reference clock may also be derived from a highly accurate clock in a central office. The transmitter may comprise a clock generator. The clock generator may be configured to generate a link frame signal clock and a locally generated clock. According to the disclosure, the clock generator may be synchronized with the reference clock. Thus, the link frame signal clock may be generated based on the reference clock.

The transmitter may comprise a signal converting unit. The signal converting unit may be configured to receive an asynchronous transport signal. As indicated above, the asynchronous transport signal may have a frame structure referred to as Optical Transport Units (OTU). In particular, each of the Optical Transport Units may comprise a frame alignment signal and a higher order Optical Data Unit (ODU) with an overhead section and a payload section. Moreover, the Optical Data Unit may represent a switchable transport entity within the Optical Transport Network and may be synchronously or asynchronously mapped into the corresponding Optical Transport Unit.

The signal converting unit may be configured to also convert the asynchronous transport signal into an outer transport frame signal OTUat-k. In particular, the asynchronous transport signal may be encapsulated into one or more outer transport frames using the locally generated clock. Thus, the asynchronous transport signal is inserted in outer data units of outer transport frames. According to an embodiment, the one or more outer transport frames may provide a data unit rate higher than a nominal bit rate of the asynchronous transport signal. In order to properly convert the asynchronous transport signal into the outer transport frame signal, the signal converting unit may comprise a mapper for adapting the bit rate of the asynchronous transport signal to the data unit rate of the one or more outer transport frames. As mentioned above, the data unit rate of the one or more outer transport frames may be derived from the locally generated clock. The signal converting unit may also comprise a framer for asynchronously mapping the rate adapted transport signal into the one or more outer transport frames at the rate of the locally generated clock.

The transmitter may further comprise a link frame signal generator. The link frame signal generator may be configured to generate a link frame signal using the link frame signal clock. In particular, the link frame signal may comprise the outer transport frame signal. In an embodiment, the link frame signal generator may be configured to also add a link frame and FEC data to the one or more outer transport frames.

The link frame signal generator may be configured to further add a reference clock status message to the link frame signal. The reference clock status message may comprise a synchronization status message (SSM). In particular, the synchronization status message (SSM) may be used to inform a subsequent network element about the quality of the reference clock. According to an embodiment, the reference clock status message may be added to one or more bytes of the link frame. In detail, the FEC data may comprise Reed-Solomon error correction information. In embodiments, the FEC data may be based on different error correction types.

According to the disclosure, the transmitter may also comprise an optical transmitter. The optical transmitter may be configured to transmit the link frame signal over an optical fiber section of the Optical Transport Network. In embodiments, the link frame signal may be optically modulated using different types of optical modulation schemes, for example, using Quadrature Amplitude Modulation (QAM) schemes.

Configured as above, by means of a clock generator which is synchronized with the reference clock for generating a link frame signal clock, the reference clock can be efficiently transmitted over the Optical Transport Network. Also, since the reference clock status message is transmitted together with the link frame signal, a subsequent network element can be informed about the quality of the reference clock through the reference clock status message. In other words, the transmitted optical signal generated using the disclosed transmitter is synchronized with the reference clock and carries the status message, so that the reference clock can be efficiently distributed over the Optical Transport Network.

Another aspect of the disclosure relates to a method for receiving a reference clock over an optical fiber section of an Optical Transport Network. The reference clock typically has a high stability and can be used for many purposes at the receiving network element. As mentioned above, the reference clock may be derived from a highly accurate clock in a central office. The method may comprise receiving an optical signal through the Optical Transport Network. The method may also comprise converting the received optical signal to an electrical signal. The electrical signal may comprise clock and data. In particular, the data may comprise a link frame signal. According to the disclosure, the link frame signal may comprise an outer transport frame signal. The outer transport frame signal may carry an asynchronous transport signal which has suitable format for transmission in the optical transport network. Moreover, the link frame signal may have been generated by a corresponding transmitter (as described above) based on the reference clock.

In embodiments, the asynchronous transport signal may have a frame structure referred to as Optical Transport Units (OTU). In particular, each of the Optical Transport Units may comprise a frame alignment signal and a higher order Optical Data Unit (ODU) with an overhead section and a payload section.

Moreover, the Optical Data Unit may represent a switchable transport entity within the Optical Transport Network.

The method may comprise extracting a link frame signal clock from the link frame signal. In an embodiment, the link frame signal may comprise a link frame overhead, the outer OTU and FEC data. The method may further comprise extracting a reference clock status message from the link frame signal. The reference clock status message may comprise a synchronization status message (SSM). More specifically, the synchronization status message (SSM) may be used to inform a subsequent network element (e.g. a downstream network element) about the quality of the reference clock. In particular, the reference clock status message may be added to one or more bytes of the link frame overhead. In detail, the FEC data may be generated based on Reed-Solomon error correction. However, the implementation of FEC data can also be based on different error correction types.

According to the disclosure, the method may further comprise validation of the reference clock status message to ensure proper receipt of the reference clock status message. The reference clock status message may be accepted within a certain amount of tolerance, and bit errors within the tolerance may be ignored. For example, an acceptance filter may be applied that evaluates reference clock status messages and validates the received information, e.g. when 2 times the same value is detected out of 3 received values. In embodiments, the method may also comprise extracting the asynchronous transport signal from outer data units of one or more outer transport frames of the outer transport frame signal. The method may further comprise filtering a clock of the extracted asynchronous transport signal. The method may also comprise processing ODU overhead of a higher order Optical Data Unit contained in the asynchronous transport signal. In an embodiment, the one or more outer transport frames may provide an outer data unit rate higher than a nominal bit rate of the asynchronous transport signal.

Configured as above, the reference clock which has been locked to the link frame signal can be extracted at a subsequent receiving network element of a transmission network (e.g. a downstream network element), so as to enable the reference clock to be efficiently transmitted over the Optical Transport Network. In particular, when receiving the link frame signal in a subsequent network element, the reference clock can be easily extracted through the link frame signal, and the quality of the reference clock can also be known from the reference clock status message. In other words, the transmitted optical signal carrying the reference clock and the status message is received according to the disclosed method, so that the reference clock can be efficiently extracted/obtained anywhere in the Optical Transport Network.

Another aspect of the disclosure relates to a receiver for receiving a reference clock over an Optical Transport Network. As mentioned above, the reference clock has a high stability. For example, the reference clock can be derived from a highly accurate clock in a central office. The receiver may comprise a coherent optical receiver. The coherent optical receiver may be configured to receive an optical signal from the Optical Transport Network. The coherent optical receiver may be configured to also convert the received optical signal to an electrical signal. In particular, the electrical signal may comprise clock and data. The data may comprise a link frame signal. According to the disclosure, the link frame signal may have been generated by a transmitter based on the reference clock.

The receiver may comprise a link frame signal termination unit. The link frame signal termination unit may be configured to extract a link frame signal clock from the link frame signal. According to the disclosure, the link frame signal may comprise an outer transport frame signal. The outer transport frame signal may carry an asynchronous transport signal. In an embodiment, the link frame signal termination unit may be configured to further extract a reference clock status message from the link frame signal. The reference clock status message may comprise a synchronization status message (SSM). In particular, the synchronization status message (SSM) may be used to inform a subsequent network element about the quality of the reference clock.

According to the disclosure, the link frame signal may comprise a link frame overhead, the outer OTU and FEC data. In particular, the reference clock status message may be added to one or more bytes of the link frame overhead. In detail, the FEC data may be based on Reed-Solomon error correction. However, the FEC data may be based on different error correction types.

In embodiments, the link frame signal termination unit may further comprise an acceptance filter. The acceptance filter may be configured to filter and validate the reference clock status message to ensure proper receipt of the reference clock status message. In particular, the acceptance filter may accept the reference clock status message within a certain amount of tolerance, and bit errors within the tolerance may be ignored, e.g. based on a majority decision for received reference clock status messages.

In an embodiment, the asynchronous transport signal may have a frame structure referred to as Optical Transport Units. As mentioned above, each of the Optical Transport Units may comprise a frame alignment signal and a higher order Optical Data Unit with an overhead section and a payload section. In particular, the Optical Data Unit may represent a switchable transport entity within the Optical Transport Network.

According to the disclosure, the receiver may further comprise a demapper. The demapper may be configured to extract the asynchronous transport signal from payload areas of one or more outer transport frames of the outer transport frame signal. In addition, the receiver may also comprise a clock data recovery circuit. The clock data recovery circuit may be configured to filter a clock of the extracted asynchronous transport signal. The receiver may further comprise an ODU overhead processor. The ODU overhead processor may be configured to process ODU overhead of a higher order Optical Data Unit contained in the asynchronous transport signal. According to an embodiment, the one or more outer transport frames may provide an outer data unit rate higher than a nominal bit rate of the asynchronous transport signal.

Configured as above, the reference clock embedded in the link frame signal can be efficiently extracted at a subsequent receiving network element (e.g. a downstream network element) after being transmitted over the Optical Transport Network. The disclosed receiver which is located in a subsequent network element allows the reference clock to be easily extracted through the link frame signal. Furthermore, the disclosed receiver in a subsequent network element is also informed about the quality of the reference clock by the reference clock status message. In other words, the transmitted optical signal carrying the reference clock and the status message is received using the disclosed receiver so that the reference clock can be efficiently extracted/obtained anywhere in the Optical Transport Network.

It will be appreciated that method steps and device features may be interchanged in many ways. In particular, the details of the disclosed devices can be implemented as a method, as the skilled person will appreciate.

### Brief Description of the Figures

Embodiments of the disclosure are explained below in an exemplary manner with reference to the accompanying drawings, wherein
**Fig. 1** schematically illustrates the functional building blocks of a transmitter **100** according to embodiments of the disclosure;
**Fig. 2** illustrates processing steps for the proposed method **200** for reference clock transmission over an OTN according to embodiments of the disclosure;
**Fig. 3** schematically illustrates the functional building blocks of a receiver **300** according to embodiments of the disclosure; and
**Fig. 4** illustrates processing steps for the proposed method **400** for receiving a reference clock over an OTN according to embodiments of the disclosure.

### Detailed Description

A basic aspect in this disclosure comprises transmitting a highly stable and accurate reference clock over an Optical Transport Network (OTN) as well as receiving a highly stable and accurate reference clock at a network element subsequent to the OTN transmission. The proposed method and devices give a specific solution for problems regarding reference clock distribution over OTN.

US patent 9,407,458 B2 "Method and Apparatus for Transmitting an Asynchronous Transport Signal over an Optical Section", which is incorporated herein by reference in its entirety, proposed to decouple the transmit clock from the to-be transmitted OTUk signal through encapsulation of the OTUk signal in an "outer transport frame" OTUat-k. A link frame signal is generated based on this "outer transport frame" signal, a frame structure/overhead and an applied forward error correction (FEC) code. It is now proposed to lock the link frame signal to a reference clock and optionally insert one or more bytes (or use one or more free bytes) in the link frame for reference clock status messaging. In the next network element in the receive direction, the reference clock may be extracted from of the received link frame signal. If provided, the reference clock status message can be extracted and evaluated. The reference clock status messages (called SSM) can be used to inform the next network element about the quality of the reference clock.

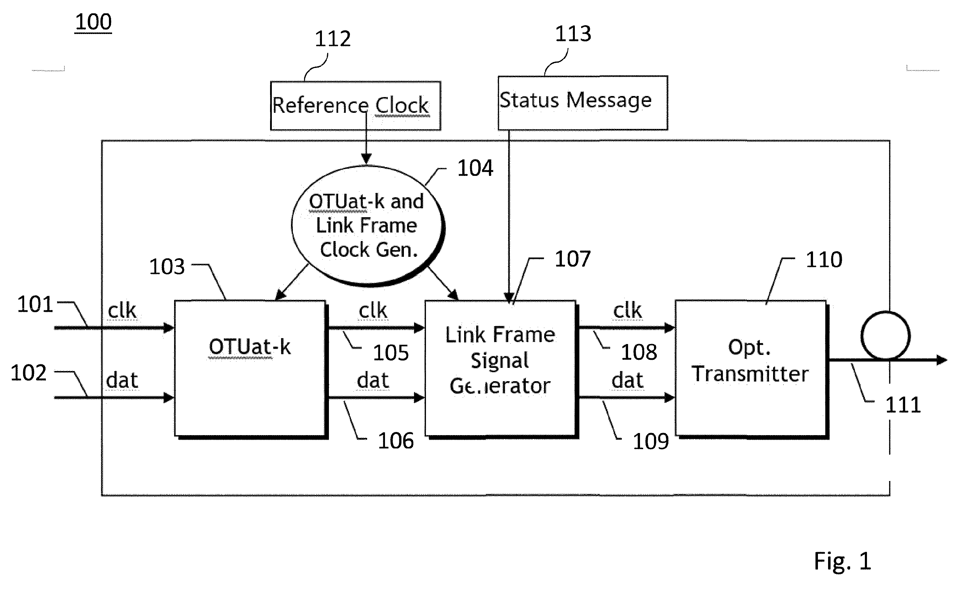

As indicated above, **Fig. 1** illustrates the functional building blocks of a transmitter **100** according to embodiments of the disclosure. It should be noted that these blocks may be applied in a network element. For example, they can be arranged on a line card of an OTN network node. The transmitter **100** includes a signal converting unit **103** and a clock generator **104**. According to an embodiment, an asynchronous transport signal. e.g. compliant with ITU-T G.709, is received by the transmitter **100** via clock **101** and data **102** lines. Typically, the asynchronous transport signal has a frame structure referred to as Optical

Transport Units (OTU) and can be an ITU-T G.709 standard compliant OTU-k signal. Also, each of the Optical Transport Units comprises a frame alignment signal and a higher order Optical Data Unit (ODU) with an overhead section and a payload section. In particular, the Optical Data Unit may represent a switchable transport entity within the OTN.

In detail, the signal converting unit **103** of the transmitter **100** receives the asynchronous transport signal comprising an asynchronous ODUk data signal **102** to be transmitted and receives a clock signal thereof **101**. Moreover, the signal converting unit **103** converts the asynchronous transport signal into an "outer transport frame" signal by encapsulating the asynchronous transport signal into one or more outer transport frames. Thus, the asynchronous transport signal is included (encapsulated) in outer data unit areas of outer transport frames.

According to the embodiment, the OTU-k signal is converted into the outer transport frame signal in the signal converting unit **103** according to the disclosure of the US patent 9,407,458 B2 "Method and Apparatus for Transmitting an Asynchronous Transport Signal over an Optical Section", which is incorporated herein by reference in its entirety. For that conversion an internal clock generator, e.g. the clock generator **104**, is used to provide a locally generated clock. This internal clock generator is locked to a reference clock **112** which has high stability and accuracy. The clock generator generates a link frame signal clock from the reference clock **112** as well.

According to the disclosure, the clock generator **104** generates the link frame signal clock and the locally generated clock. The link frame signal clock and the locally generated clock may have the same or different rates. It should be also noted that the clock generator **104** is synchronized with the reference clock **112**. The clock generator **104** may generate the link frame signal clock based on the reference clock **112**.

Furthermore, the signal converting unit **103** encapsulates (wraps) the asynchronous transport signal **102** into outer data units of the one or more outer transport frames using the locally generated clock. In an embodiment, the signal converting unit **103** includes a mapper and a framer (not shown). The mapper is used for rate adaption, i.e. to adapt the bit rate of the asynchronous transport signal **102** to an outer data unit rate provided by the one or more outer transport frames. In an embodiment, the mapper can be implemented with Generic Mapping Procedure (GMP) as defined in ITU-T G.709 for justification and rate adaptation.

Subsequently, the mapper (e.g. a GMP mapper) processed output signal and adjusted clock (not shown) are fed to the framer. The framer may convert the mapper processed output signal synchronously into the one or more outer transport frames to be transmitted at the rate of the locally generated clock. Accordingly, the transmit clock can be decoupled from the OTUk signal which is to be transmitted through encapsulation of the OTUk signal into an "outer transport frame" OTUat-k, as described in detail in the US patent 9,407,458 B2 "Method and Apparatus for Transmitting an Asynchronous Transport Signal over an Optical Section", which is incorporated herein by reference in its entirety.

In other words, after being processed by the mapper and the framer included in the signal converting unit **103**, the asynchronous transport signal **102** is converted into the outer transport frame signal **106** which comprises the one or more outer transport frames (e.g. an OTUat-k signal). It is further noted that the clock generator **104** provides the locally generated clock signal to the mapper and framer according to the embodiment.

The transmitter **100** also includes a link frame signal generator **107**. The outer transport frame signal **106** and the corresponding clock **105** are fed to the link frame signal generator **107**, which generates a link frame signal **109** comprising the outer transport frame signal **106** using the link frame signal clock generated by the clock generator **104** based on the reference clock **112**. More specifically, the generated link frame signal **109** is based on the outer transport frame signal **106**, a frame structure (link frame overhead) and an applied forward error correction (FEC) code.

According to an embodiment, the link frame signal generator **107** generates the link frame signal **109** from the OTUat-k signal (i.e. the outer transport frame signal **106** and the corresponding clock **105**) by adding a link frame and FEC data. That is, the link frame signal generator **107** adds the link frame and FEC data to the one or more outer transport frames. In general, the FEC data are applied to detect and correct errors at the receiver side by placing information in a frame at the transmitter side, and the FEC implementation is based on, for example, but not limited to the Reed-Solomon code RS (255, 239) as defined in the G.709 recommendation. In some embodiments, the FEC data can also be implemented using different error correction types, and different types of FEC can be applied in the link frame signal generator **107**. In is noted that the link frame signal could of course be operated without a FEC as well, which is the usual operation in DWDM networks.

In brief, the OTU signal is mapped into an outer ODU which is then mapped into an outer OTU (OTUat). The entire conversion of data units on the transmitter side may be considered as follows: payload → OPU → ODU → OTU (G.709 compliant) → outer ODU → outer OTU → link frame signal. The mapping on the receiver side is reversed.

In addition, the link frame signal generator **107** adds a reference clock status message **113** into the link frame signal **109**. In particular, the reference clock status message **113** is added in one or more bytes into the link frame which is/are added to the one or more outer transport frames of the outer transport frame signal **106** included in the link frame signal **109**. Further according to an embodiment, the reference clock status message **113** can be a synchronization status message (SSM) used to inform a subsequent network element about the quality of the reference clock. The processing and usage of SSM may be used in a similar manner to that from SDH/SONET and applied to "Synchronous Ethernet".

In particular, the SSM is used to transport a quality level identifier which can be applied to select the highest synchronization level incoming reference signal from a set of nominated synchronization references available at a network element. In general, the SSM can be regarded as an application-specific data communication channel with a limited message set. The message to be generated and inserted depends on the applied quality level indication that is input to the adaptation source function. Besides, the SSM generation may be disabled (e.g. by inserting 1111) at network boundaries so as to prevent synchronization information from being forwarded to the other network. **Table 1** shows an example illustrating the relation between the quality level set and SSM coding in option I synchronization networks according to Rec. ITU-T G.781.

**Table 1**

| Quality level (QL) | SSM usage | SSM coding [MSB..LSB] |
|---|---|---|
| QL-PRC | Enabled | 0010 |
| QL-SSU-A | Enabled | 0100 |
| QL-SSU-B | Enabled | 1000 |
| QL-SEC | Enabled | 1011 |
| QL-DNU | Enabled | 1111 |
| - | Disabled | 1111 |

Subsequently, the link frame signal **109** in a form of an electrical signal is forwarded to an optical transmitter **110** of the transmitter **100** which generates an optical signal from the electrical signal. More specifically, the link frame signal **109** and corresponding clock **108** are fed to the optical transmitter **110** which modulates the link frame signal **109** onto an optical carrier and emits it onto an output optical fiber **111**. It should be noted that different types of optical modulation schemes, e.g. quadrature amplitude modulation (QAM) schemes, can be applied in the optical transmitter **110** but independent of that, the transmitted signal is always locked to the reference clock **112**. Accordingly, the transmitted optical signal carries the reference clock **112** and the status message **113**.

As such, by locking the link frame signal **109** to the reference clock **112** and inserting one or more bytes (or use one or more free bytes) in the link frame for reference clock status messaging, the reference clock **112** can be efficiently transmitted over the OTN and a subsequent network element can be informed about the quality of the reference clock **112** through the reference clock status message **113**, which provides the most efficient and most cost-effective way to transmit reference clocks across the optical transport network.

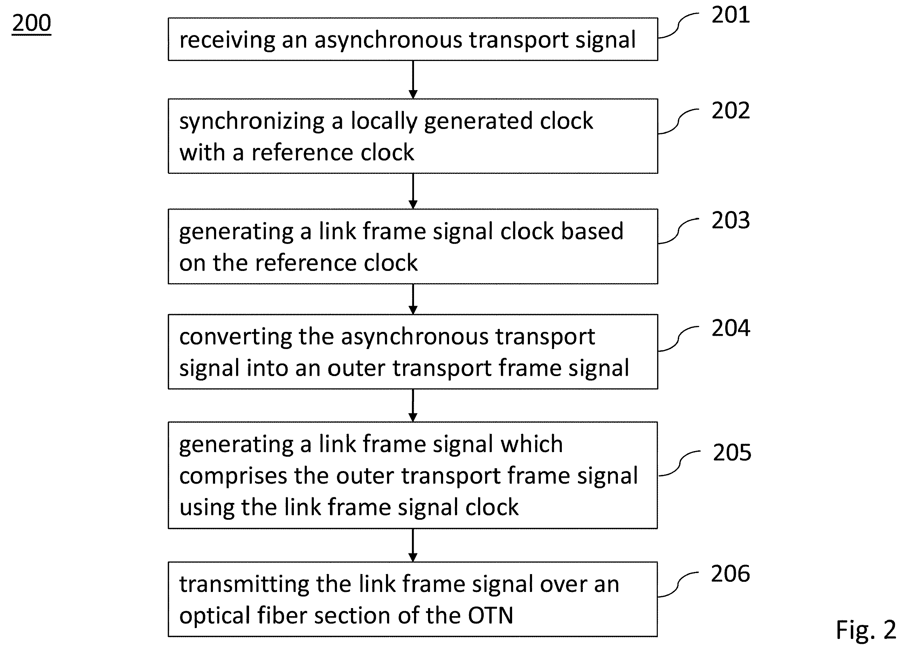

**Fig. 2** illustrates processing steps for the proposed method for reference clock transmission over an OTN according to embodiments of the disclosure. The method **200** can be implemented by the transmitter **100** as illustrated in **Fig. 1**. The method **200** comprises receiving (step **201**) an asynchronous transport signal and synchronizing (step **202**) a locally generated clock with a reference clock. The method **200** also comprises generating (step **203**) a link frame signal clock based on the reference clock. The method comprises converting (step **204**) the asynchronous transport signal into an outer transport frame signal by encapsulating the asynchronous transport signal into one or more outer transport frames using the locally generated clock. The method further comprises generating (step **205**) a link frame signal which comprises the outer transport frame signal using the link frame signal clock and transmitting (step **206**) the link frame signal over an optical fiber section of the OTN. Optionally, a reference clock status message may be added to the link frame signal to inform the receiving network element about the quality of the reference clock that was used on the transmitter side to generate the link frame signal (via the link frame signal clock). As indicated above, the proposed method **200** enables efficient and cost-effective transmission of reference clocks across the optical transport network.

It should be noted that the device features described above correspond to respective method features that may be however not explicitly described, for reasons of conciseness. The disclosure of the present document is considered to extend also to such method features.

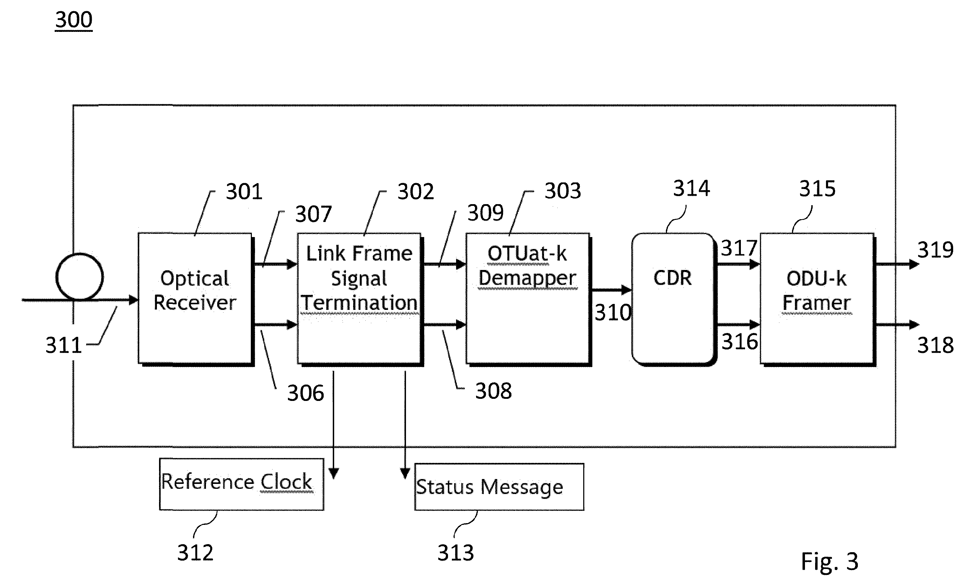

At a next network element, the above optical signal is received and further processed. **Fig. 3** illustrates the functional building blocks of a receiver **300** for such purposes according to embodiments of the disclosure. These blocks may be applied in a network element, e.g. a line card of a network node, subsequent to transmission over OTN.

The receiver **300** contains an optical receiver **301** and a link frame signal termination unit **302**. The optical receiver **301** receives an optical signal **311** from the OTN and converts the received optical signal to an electrical signal. The optical receiver could be of any type, e.g. direct detect or even coherent. The principles and design of the optical coherent receiver **301** are described in the document "Real-Time Implementation of Digital Signal Processing for Coherent Optical Digital Communication Systems" by A. Leven et al, IEEE Journal of Selected Topics in Quantum Electronics, vol. 16 no. 5, September/October 2010, pp. 1227-1234, which is incorporated by reference herein.

In particular, the electrical signal converted by the optical receiver **301** comprises clock and data. In the case that the receiver **300** received the optical signal transmitted from a transmitter as illustrated in **Fig. 1**, i.e. from the transmitter **100**, the received data may comprise a link frame signal similar to the link frame signal **109** which has been generated by the transmitter **100** based on the reference clock **112**. As illustrated in **Fig. 3**, the output of optical receiver **301** includes data and clock signals **306**, **307** which are fed to the link frame signal termination unit **302**. According to the disclosure, the link frame signal termination unit **302** extracts a link frame signal clock from the link frame signal included in the received data **306**. As indicated above, the link frame signal **306** also includes an outer transport frame signal which carries an asynchronous transport signal as described in **Fig. 1**. That is, the link frame signal **306** carries the asynchronous transport signal which has a frame structure referred to as OTUs and can be an ITU-T G.709 standard compliant OTU-k signal. It is noted that the link frame signal termination unit **302** extracts the received clock **312** which is the reference clock **112**, since the link frame signal clock has been generated based on the reference clock **112**.

The link frame signal termination unit **302** further extracts a reference clock status message **313** from the link frame signal **306**. As indicated above, the reference clock status message **313** may comprise a synchronization status message (SSM) used to inform a subsequent network element about the quality of the reference clock. Furthermore, the reference clock status message **313** was added to one or more bytes of a link frame included in the link frame signal **306**. In order to be tolerant to bit errors on the line, the SSM may run through an acceptance filter (not shown). In an embodiment, the acceptance filter is placed in the link frame signal termination unit **302** to filter and verify the reference clock status message **313** so that proper receipt of the reference clock status message **313** is ensured. For example, the acceptance filter accepts a reference clock status message **313** within a certain amount of tolerance and therefore bit errors within the tolerance can be ignored, e.g. by making a decision based on a majority vote.

Accordingly, in the receiving direction, the reference clock is extracted from the received link frame signal at the next network element and also the reference clock status message is extracted and evaluated there. As mentioned above, the reference clock status message (i.e. SSM) is advantageously used to inform the next network element about the quality of the reference clock. In detail, the received SSM bits may be validated by a persistency check and then interpreted to determine the quality level according to relation between the quality level set and SSM coding as illustrated in the example of **Table 1**, which shows an interpretation of SSM codes in option I synchronization networks according to Rec. ITU-T G.781.

The receiver **300** further includes a demapper **303** that receives the outer transport frame signal **308** from the link frame signal termination unit **302**. The demapper **303** extracts the asynchronous transport signal (OTU-k) from outer data unit area of one or more outer transport frames of the outer transport frame signal **308**. In detail, the demapper **303** may include a frame termination unit (de-framer) and a GMP demapper. The receiver **300** further includes a clock data recovery (CDR) circuit **314** for extracting a clock of the extracted asynchronous transport signal **310** and an ODU framer/processor (i.e. a ODU framer) **315** for extracted ODUk frames for processing ODU overhead of a higher order ODU contained in the asynchronous transport signal **310**.

According to the embodiment, the output of de-framer is sent to a GMP demapper (not shown), which extracts the asynchronously embedded ODUk signal. The result is the native ODUk signal **310** that was originally encapsulated (by the transmitter) into the received transport frames. This signal **310** is fed to the CDR block **314**, which has a PLL of e.g. 300 Hz bandwidth to remove jitter resulting from the GMP mapping and stuffing mechanism. The filtered clock **317** and data signal **316** are fed to the ODU framer **315**, which implements standard ODU overhead processing and provides the ODUk frames **318** and clock **319** to a standard ODUk interconnection function (not shown) of the receiving network element.

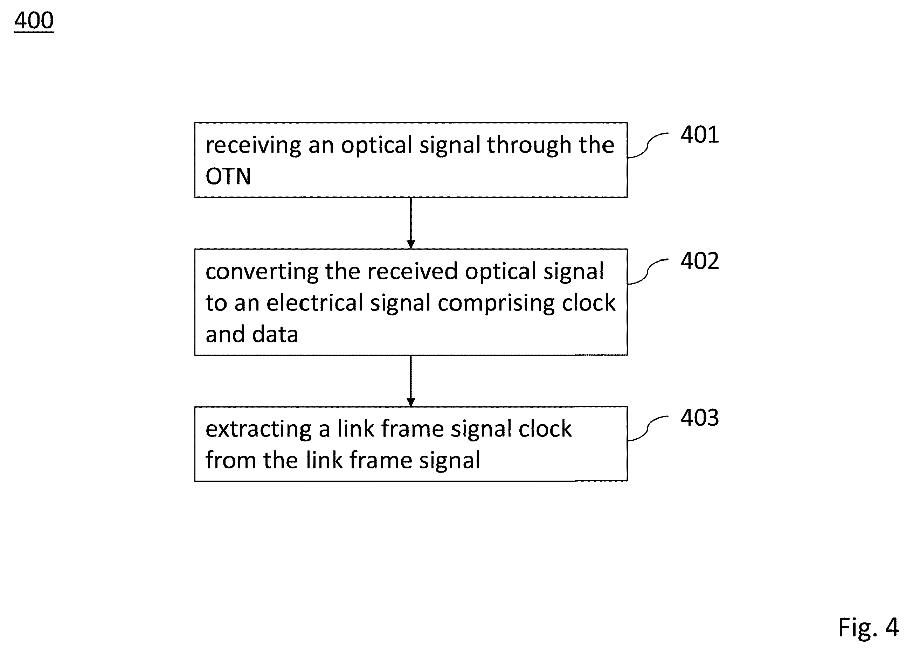

**Fig. 4** illustrates processing steps for the proposed method for receiving a reference clock over an OTN according to embodiments of the disclosure. The method **400** can be implemented by the receiver **300** as illustrated in **Fig. 3**. The method **400** comprises receiving (step **401**) an optical signal through the OTN. The method **400** also comprises converting (step **402**) the received optical signal to an electrical signal comprising clock and data. It should be noted that the data comprise a link frame signal which includes an outer transport frame signal carrying an asynchronous transport signal. It should be further noted that the link frame signal has been generated by a transmitter (e.g. the transmitter **100**) based on the reference clock. The method **400** further comprises extracting (step **403**) a link frame signal clock from the link frame signal. It should be further noted that a reference clock status message (e.g. SSM bytes) may be extracted and evaluated from the link frame signal. This may be performed in another step subsequent to step 403 (not shown). The information in the reference clock status message may be used to judge the quality of the link frame signal clock that has been derived from a reference clock on the transmitter side. This allows that a network element selects a clock signal (from a plurality of extracted link frame signal clocks) as reference that has the highest quality as indicated e.g. in the respective SSM bytes of the received link frame signals.

It should be noted that the device features described above correspond to respective method features that may be however not explicitly described, for reasons of conciseness. The disclosure of the present document is considered to extend also to such method features.

As such, by extracting the link frame signal which has been made synchronized to the reference clock using the receiver **300** and the method **400**, the reference clock can be efficiently extracted at a subsequent receiving network element after being transmitted over the OTN. It is also beneficial that a subsequent network element (which has the receiver **300**) can be informed about the quality of the reference clock through the reference clock status message, which provides an efficient and cost-effective way to distribute reference clocks in the optical transport network.

It is therefore appreciated that no additional hardware or extra wavelength is needed by applying the proposed methods and devices, and the signal can travel very long distances without regeneration due to the transparent transport through optical in-line amplifiers or reconfigurable optical add/drop multiplexers based on wavelength selective switches or any other optical switching device.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. A method for transmitting a reference clock having a high stability over an optical fiber section of an Optical Transport Network, comprising:
receiving an asynchronous transport signal;
synchronizing a locally generated clock with the reference clock;
generating a link frame signal clock based on the reference clock;
converting said asynchronous transport signal into an outer transport frame signal by encapsulating said asynchronous transport signal into one or more outer transport frames using the locally generated clock;
generating a link frame signal comprising said outer transport frame signal using the link frame signal clock; and
transmitting said link frame signal over said optical fiber section.

2. The method of claim 1, wherein said asynchronous transport signal has a frame structure referred to as Optical Transport Units.

3. The method of claim 2, wherein each of the Optical Transport Units comprises a frame alignment signal and a higher order Optical Data Unit with an overhead section and a payload section, said Optical Data Unit representing a switchable transport entity within said Optical Transport Network and being mapped into the corresponding Optical Transport Unit.

4. The method of any previous claim, wherein the one or more outer transport frames provide a data unit rate higher than a nominal bit rate of said asynchronous transport signal.

5. The method of any previous claim, wherein said encapsulating comprises:
adapting the bit rate of said asynchronous transport signal to the outer data unit rate of said one or more outer transport frames derived from said locally generated clock; and
synchronously mapping the rate adapted transport signal into said one or more outer transport frames at the rate of said locally generated clock.

6. The method of any previous claim, the generation of the link frame signal comprising adding a link frame overhead, and FEC data to said one or more outer transport frames.

7. The method of any previous claim, further comprising adding a reference clock status message to the link frame signal, the reference clock status message optionally added to one or more bytes of a link frame overhead.

8. A transmitter for transmitting a reference clock having a high stability over an Optical Transport Network, comprising:
a clock generator configured to generate a link frame signal clock and a locally generated clock, wherein the clock generator is synchronized with the reference clock, wherein the link frame signal clock is generated based on the reference clock;
a signal converting unit configured to receive an asynchronous transport signal and convert said asynchronous transport signal into an outer transport frame signal, wherein said asynchronous transport signal is encapsulated into one or more outer transport frames using the locally generated clock;
a link frame signal generator configured to generate a link frame signal comprising said outer transport frame signal using the link frame signal clock; and
an optical transmitter configured to transmit said link frame signal over an optical fiber section of said Optical Transport Network.

9. The transmitter of claim 8, wherein said signal converting unit comprises:
a mapper for adapting the bit rate of said asynchronous transport signal to the outer data unit rate of said one or more outer transport frames derived from said locally generated clock; and
a framer for synchronously mapping the rate adapted transport signal into said one or more outer transport frames at the rate of said locally generated clock.

10. A method for receiving a reference clock having a high stability over an optical fiber section of an Optical Transport Network, comprising:
receiving an optical signal through said Optical Transport Network;
converting the received optical signal to an electrical signal comprising clock and data, the data comprising a link frame signal, wherein the link frame signal comprises an outer transport frame signal carrying an asynchronous transport signal, and the link frame signal has been generated by a transmitter based on the reference clock; and
extracting a link frame signal clock from said link frame signal;

11. The method of claim 10, further comprising extracting a reference clock status message from the link frame signal.

12. The method of claim 11, further comprising filtering the reference clock status message.

13. The method of any of the claims 10 - 12, further comprising:
extracting said asynchronous transport signal from outer data unit areas of one or more outer transport frames of said outer transport frame signal;
filtering a clock of the extracted asynchronous transport signal; and
processing ODU overhead of a higher order Optical Data Unit contained in said asynchronous transport signal.

14. A receiver for receiving a reference clock having a high stability over an Optical Transport Network, comprising:
a optical receiver configured to receive an optical signal from said Optical Transport Network and to convert the received optical signal to an electrical signal comprising clock and data, the data comprising a link frame signal, wherein the link frame signal has been generated by a transmitter based on the reference clock; and
a link frame signal termination unit configured to extract a link frame signal clock and an optional status message from the link frame signal,
wherein the link frame signal comprises an outer transport frame signal carrying an asynchronous transport signal.

15. The receiver of claim 14, further comprising:
a demapper configured to extract said asynchronous transport signal from outer data unit areas of one or more outer transport frames of said outer transport frame signal;
a clock data recovery circuit configured to filter a clock of the extracted asynchronous transport signal; and
an ODU overhead processor configured to process ODU overhead of a higher order Optical Data Unit contained in said asynchronous transport signal.
